# EUROPÄISCHE PATENTSCHRIFT

(11) **EP 1 426 246 B1**
(45) Veröffentlichungstag und Bekanntmachung des Hinweises auf die Patenterteilung: **14.02.2007**
(21) Anmeldenummer: 03020216.2
(22) Anmeldetag: 06.09.2003
(51) Int. Cl.: B60R 21/20, B60R 21/16

(54) **Sicherheitseinrichtung für Insassen eines Kraftfahrzeugs**
Safety device for vehicle occupants
Dispositif de sécurité pour passagers

(30) Priorität: 07.12.2002 DE 10257249
(43) Veröffentlichungstag der Anmeldung: 09.06.2004
(73) Patentinhaber: Dr.Ing. h.c.F. Porsche Aktiengesellschaft, 70435 Stuttgart (DE); Autoliv Development AB, 44783 Vargarda (SE)
(72) Erfinder: Linder, Leo, 89269 Vöhringen (DE); Mäsing, Alfons, 75417 Mühlacker-Enzberg (DE); Müller, Frank, 71229 Leonberg (DE); Boegge, Herbert, 75446 Wiernsheim (DE); Tiefenthaler, Peter, 80689 München (DE); Binknus, Karl, 86161 Augsburg (DE); Rösch, Franz, 130061 Changchun, Jilin Province (CN)

(56) Entgegenhaltungen:
- EP-A- 0 523 704
- EP-A- 0 673 808
- EP-A- 0 812 739
- EP-A- 0 878 358
- US-A- 4 966 388
- US-A- 5 868 421

## Beschreibung

Die Erfindung betrifft eine Sicherheitseinrichtung für Insassen eines Kraftfahrzeugs in Form eines mit Gas füllbaren Schutzsacks nach dem Oberbegriff des Patentanspruchs 1.

Ein bekannte Sicherheitseinrichtung, US 5,333,899, umfasst einen unteren an einer Tür angebrachten Luftsack und einen oberen an einem seitlichen Dachrahmen angebrachten Luftsack, die im mit Medium gefüllten Zustand über entsprechende Formabschnitte formschlüssig zusammenarbeiten. Beide Luftsäcke weisen dabei ein relativ großes sich in Richtung Insassen erstreckendes, relativ viel Raum beanspruchendes Volumen auf.

Aus der DE 200 12 116 U 1 geht ein Schutzkissen in einem Fahrgastraum im Bereich eines Seitenwand hervor, das mittels einer sich entlang einer A-Säule und einem Dachrahmen verlaufenden Gasleitung aufgeblasen wird. Bei der Ausführung entfaltet sich das Schutzkissen von besagter Gasleitung aus, und zwar von oben nach unten.

Eine Sicherheitseinrichtung gemäß dem Oberbegriff ist aus der EP 0 812 739 A bekannt.

Es ist Aufgabe der Erfindung ein Schutzkissen einer Sicherheitseinrichtung so zu gestalten, dass ihr Schutzkissen bei guter Funktion und ihre anderen Komponenten räumlich vorteilhaft an der Tür untergebracht sind.

Erfindungsgemäß wird dies Aufgabe durch die Merkmale des Patentanspruchs 1 gelöst Weitere, die Erfindung ausgestaltende Merkmale sind in den Unteransprüchen enthalten.

Die mit der Erfindung hauptsächlich erzielten Vorteile sind darin zu sehen, dass der Luftsack so ausgelegt ist, dass er im aufgeblasenem Zustand in etwa mit parallelem Abstand zu einer Seitenscheibe der Tür verläuft, und zwar mit einem relativ geringen in Richtung Insassen verlaufenden Volumen. Dabei weist der Luftsack eine definierte Formsteifigkeit auf, die durch in ihn eingearbeitete Abschnitte erzielt wird. Dass der Luftsack beim entfalten über eine Türverkleidung austritt, unterstützt nicht nur einen funktionsgerechten Aufblasvorgang, sondern erleichtert auch, den Luftsack räumlich günstig unterzubringen. Letzteres gilt auch, wenn der Luftsack mit einer Gaslanze eine Baueinheit bildet, die an einem Montageträger im Türkörper befestigt ist, und wenn benachbart der besagten Baueinheit im Türkörper ein Gasgenerator untergebracht ist.

In der Zeichnung wird ein Ausführungsbeispiel der Erfindung gezeigt, das nachstehend näher beschrieben wird.

Es zeigen
- Fig. 1: einen Querschnitt durch einen Aufbau eines Kraftfahrzeugs mit der erfindungsgemäßen Sicherheitseinrichtung,
- Fig. 2: eine Ansicht in Pfeilrichtung A der Fig.1,
- Fig. 3: einen Schnitt nach der Linie III-III der Fig. 2,
- Fig. 4: eine schematischen Schnitt nach der Linie IV-IV der Fig. 2.

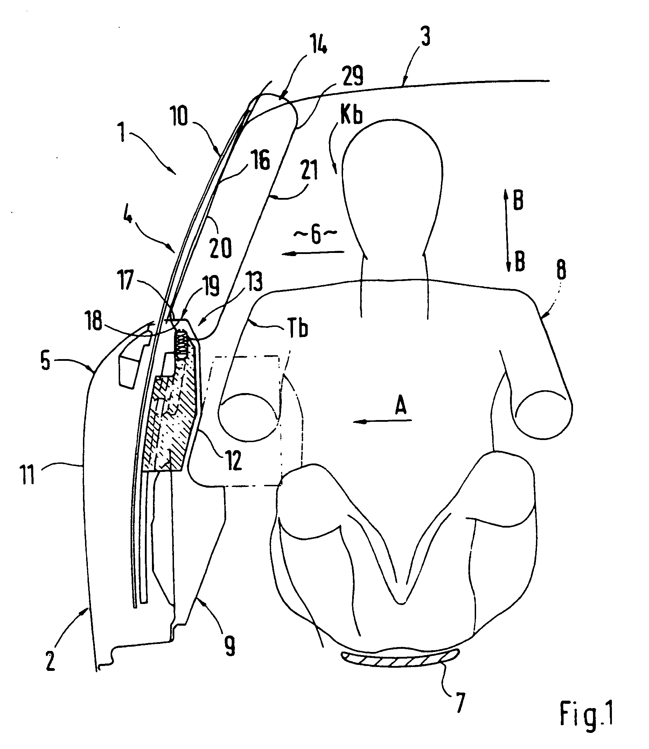

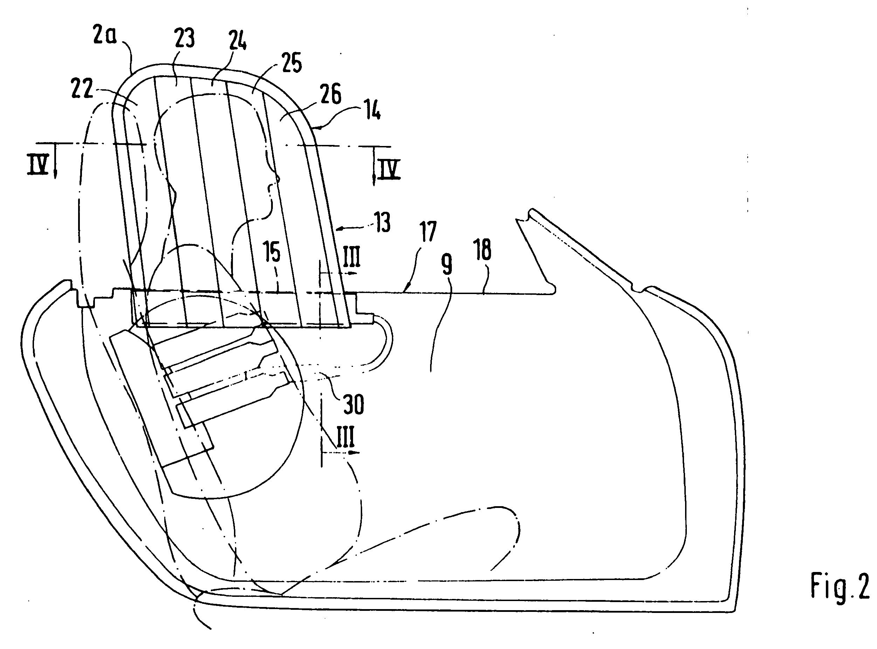

Ein Kraftfahrzeug 1 umfasst einen Aufbau 2 mit einem Dach 3 und einer Seitenwand 4, in die eine Tür 5 eingesetzt ist - Fig. 1-. Die Tür 5 begrenzt einen Fahrgastraum 6 für wenigstens einen auf einem Sitz 7 ruhenden Insassen 8 und weist einen Türkörper 9 und eine Türscheibe 10 auf, die in besagten Türkörper 9 versenkbar ausgebildet ist. Der Türkörper 9 wird durch eine Außenwand 11 und einen im Fahrgastraum 6 verlaufenden Innenrahmen 12 gebildet, und er ist mit einer Sicherheitseinrichtung 13 für den Insassen 8 versehen. Die Sicherheitseinrichtung 13 dient vor allem dem Schutz des Thoraxbereichs Tb bzw. Kopfbereichs Kb des Insassen 8 und wirkt wie ein im Kraftfahrzeugbau unter dem Begriff Airbag bekanntes passives Sicherheitssystem, bei dem unter dem Einfluss einer Fahrzeugkollision ein pyrotechnischer Treibstoff gezündet wird, wodurch in Sekundenbruchteilen ein zusammengelegter Schutzsack aufgeblasen wird. Die Sicherheitseinrichtung 13 besitzt einen derartigen Schutzsack 14, der im eingefahrenen Zustand Ze als ein im vollen Umfang im Türkörper 9 versenktes Paket 15 zusammengefaltet ist und sich im aufgeblasenen Zustand Za - Fig. 1 und 2 - entlang einer Innenseite 16 der Türscheibe 10 erstreckt.

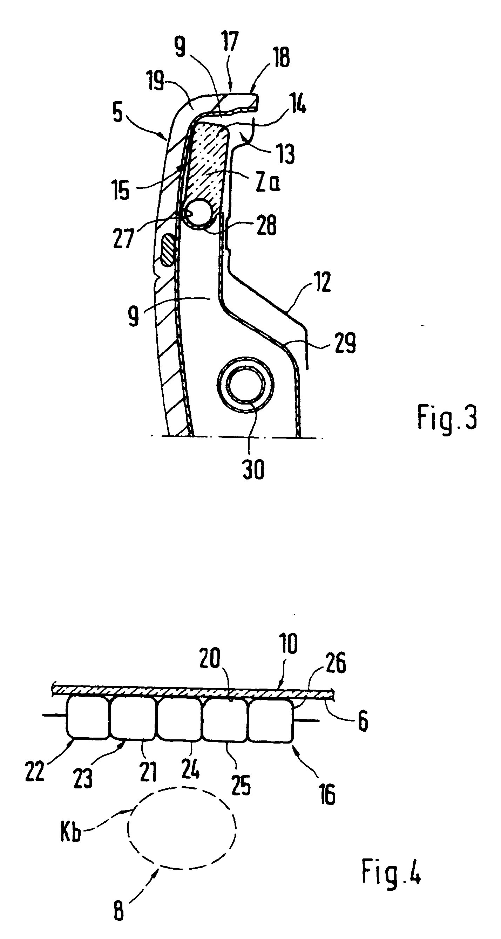

Hierzu tritt der Schutzsack 14 beim Entfalten über eine benachbart einer Gürtellinie 17 bzw. einer Türbrüstung 18 verlaufenden Türverkleidung 19 aus dem Türkörper 9 heraus, um sich in Richtung Dach 3 zu bewegen. Der Schutzsack 14 ist so bemessen und ausgestaltet, dass er im aufgeblasenen Zustand Za einerseits mit einer ersten Wand 20 an der Innenseite 16 der Türscheibe 10 anliegt und andererseits mit einer von dieser Türscheibe 10 abgewandten bzw. einer dem Insassen 8 zugekehrten zweiten Wand 21 in etwa mit gleichem Abstand und/oder parallel zur Türscheibe 10 bzw. der ersten Wand 20 verläuft - Fig. 1 und 4 -. Darüber hinaus weist der Luftsack 14 mehrere hohlkörperartige letzterem im aufgeblasenen Zustand Za eine definierte Formsteifigkeit verleihende Abschnitte 22, 23, 24, 25, 26 - Fig. 2 und 4 - auf, die im Ausführungsbeispiel einen etwa gleichen Querschnitt besitzen. Und die hohlkörperartigen Abschnitte 22, 23, 24, 25 und 26 erstrecken sich mit gleichem Abstand zueinander, und zwar in Fahrzeughöhenrichtung B - B.

Gemäß den Fig. 2 und 3 bilden das Paket 15 und eine Gaslanze 27 eine Baueinheit 28 innerhalb des Türkörpers 9, die an einem benachbart zum Innenrahmen 12 verlaufenden Montageträger 29 befestigt ist - Fig. 3 -. Schließlich ist auch noch eine Gasgenerator 30 der Sicherheitseinrichtung 13 im Türkörper 9 untergebracht, welcher Gasgenerator 30 ebenfalls am Innenrahmen 12 angebracht sein kann.

## Patentansprüche

1. Sicherheitseinrichtung (13) für Insassen (8) eines Kraftfahrzeugs (1) in Form eines mit Gas füllbaren Schutzsacks (14), der in eingefahrenem Zustand (Ze) nach Art eines Pakets (15) zusammengefaltet ist und sich im aufgeblasenen Zustand (Za) entlang einer Innenseite (16) einer Seitenscheibe, vorzugsweise Türscheibe (10) einer Tür (5) eines Aufbaus (2) zum Aufprallschutz für einen benachbart sitzenden Insassen, insbesondere dessen Kopfbereich (Kb), erstreckt, wobei das Paket (15) des Schutzsacks (14) in vollem Umfang versenkt innerhalb eines Türkörpers (9) der Tür (5) angeordnet ist und mit einer Gaslanze (27) eine Baueinheit (28) bildet, wobei benachbart zur Baueinheit (28) im Türkörper (90) ein Gasgenerator (30 untergebracht ist, und wobei der Schutzsack (14) sich beim Aufblasen von dem Türkörper (9) aus in Richtung eines Dachs (3) im Wesentlichen entlang der Türscheibe (10) entfaltet, **dadurch gekennzeichnet, dass** der Gasgenerator (30) unterhalb der Baueinheit (28) etwa parallel dazu verläuft und dass die Gaslanze (27) den Gasgenerator (30) mit der Baueinheit (28) über einen U - förmigen Abschnitt verbindet.

2. Sicherheitseinrichtung nach Anspruch 1, **dadurch gekennzeichnet, dass** der Schutzsack (14) in der Weise ausgebildet ist, das eine von der Türscheibe (10) abgewandte Wand (21) des Schutzsacks (14) im aufgeblasenen Zustand (Za) sich in etwa mit parallelem Abstand zur Türscheibe (10) erstreckt.

3. Sicherheitseinrichtung nach Anspruch 1, **dadurch gekennzeichnet, dass** der Schutzsack (14) mehrere hohlkörperartige dem Schutzsack (14) im aufgeblasenen Zustand (Za) eine definierte Formsteifigkeit verleihende Abschnitte (22,23,24,25,26) aufweist.

4. Sicherheitseinrichtung nach Anspruch 3, **dadurch gekennzeichnet, dass** die hohlkörperartigen Abschnitte (22,23,23,24,25,26) des Schutzsacks (14) mit in etwa gleichem Querschnitt ausgeführt sind.

5. Sicherheitseinrichtung nach Anspruch 4, **dadurch gekennzeichnet, dass** die hohlkörperartigen Abschnitte (22,23,24,25,26) sich mit gleichem Abstand zueinander in Fahrzeughöhenrichtung (B) erstrecken.

6. Sicherheitseinrichtung nach Anspruch 1, **dadurch gekennzeichnet, dass** der Schutzsack (14) beim Entfalten über eine Türverkleidung (19), vorzugsweise benachbart einer Gürtellinie (17) austritt.

7. Sicherheitseinrichtung nach Anspruch 1, **dadurch gekennzeichnet, dass** die Baueinheit (28) an einem Montageträger (29) im Türkörper (9) befestigt ist.

## Claims

1. A safety device (13) for occupants (8) of a motor vehicle (1) in the form of a protective bag (14) which is capable of being filled with gas and which in the retracted state (Ze) is folded up in the manner of a packet (15) and in the inflated state (Za) extends along an inner side (16) of a side window pane, preferably a door window pane (10) of a door (5) of a body (2) for the protection from impact of an occupant sitting adjacent thereto, in particular his or her head area (Kb), wherein the packet (15) of the protective bag (14) is arranged recessed over its entire periphery inside a door body (9) of the door (5) and forms a structural unit (28) with a gas lance (27), wherein a gas generator (30) is housed adjacent to the structural unit (28) in the door body (90) [*sic* - *recte* (9)], and wherein the protective bag (14), when inflated, is unfolded out of the door body (9) in the direction of a roof (3) substantially along the door window pane (10), **characterized in that** the gas generator (30) extends below the structural unit (28) and substantially parallel thereto, and the gas lance (27) connects the gas generator (30) to the structural unit (28) by way of a U-shaped portion.

2. A safety device according to Claim 1, **characterized in that** the protective bag (14) is designed in such a way that in the inflated state (Za) a wall (21) of the protective bag (14) facing away from the door window pane (10) extends substantially at a parallel distance from the door window pane (10).

3. A safety device according to Claim 1, **characterized in that** the protective bag (14) comprises a plurality of hollow-body-like portions (22, 23, 24, 25, 26) which impart a defined dimensional stability to the protective bag (14) in the inflated state (Za).

4. A safety device according to Claim 3, **characterized in that** the hollow-body-like portions (22, 23, 23, 24, 25, 26) of the protective bag (14) are constructed with substantially the same cross-section.

5. A safety device according to Claim 4, **characterized in that** the hollow-body-like portions (22, 23, 24, 25, 26) extend at an equal distance from one another in the vertical direction (B) of the vehicle.

6. A safety device according to Claim 1, **characterized in that**, as it is unfolded, the protective bag (14) passes out over a door lining (19) preferably adjacent to a waist line (17).

7. A safety device according to Claim 1, **characterized in that** the structural unit (28) is fastened to an assembly support (29) in the door body (9).

## Revendications

1. Dispositif de sécurité (13) pour des passagers (8) d'un véhicule automobile (1) sous la forme d'un sac de protection (14) pouvant être rempli de gaz, qui est replié, lorsqu'il est rentré (Ze) à la façon d'un paquet (15), et s'étend, lorsqu'il est gonflé, le long d'un côté intérieur (16) d'une vitre latérale, de préférence la vitre (10) d'une porte (5) d'une carrosserie (2), pour la protection anticollision pour un passager assis à proximité, en particulier la zone de sa tête (Kb), le paquet (15) du sac de protection (14) étant disposé, complètement abaissé, à l'intérieur d'un corps de porte (9) de la porte (5) et formant un module (28) avec une lance de gaz (27), un générateur de gaz (30) étant logé dans le corps de porte (90) à proximité du module (28), et le sac de protection (14) se dépliant lors du gonflage à partir du corps de porte (9) en direction d'un toit (3) principalement le long de la vitre de porte (10), **caractérisé en ce que** le générateur de gaz (30) est disposé au-dessous du module (28) à peu près parallèlement à celui-ci et **en ce que** la lance de gaz (27) relie le générateur de gaz (30) au module (28) au moyen d'une partie en U.

2. Dispositif de sécurité selon la revendication 1, **caractérisé en ce que** le sac de protection (14) est conçu de telle sorte qu'une paroi (21), opposée à la vitre de porte (10), du sac de protection (14) s'étend dans l'état (Za) gonflé à peu près à distance parallèle à la vitre de porte (10).

3. Dispositif de sécurité selon la revendication 1, **caractérisé en ce que** le sac de protection (14) présente plusieurs parties (22, 23, 24, 25, 26) en forme de corps creux, donnant au sac de protection (14) dans l'état gonflé (Za) une rigidité de forme définie.

4. Dispositif de sécurité selon la revendication 3, **caractérisé en ce que** les parties (22, 23, 24, 25, 26) en forme de corps creux du sac de protection (14) sont réalisées avec une section à peu près identique.

5. Dispositif de sécurité selon la revendication 4, **caractérisé en ce que** les parties (22, 23, 24, 25, 26) en forme de corps creux s'étendent à égale distance les unes des autres dans le sens de hauteur du véhicule (B).

6. Dispositif de sécurité selon la revendication 1, **caractérisé en ce que** le sac de protection (14) sort lors du déploiement par un habillage de porte (19), de préférence à proximité d'une ligne de ceinture (17).

7. Dispositif de sécurité selon la revendication 1, **caractérisé en ce que** le module (28) est fixé sur un support de montage (29) dans le corps de porte (9).
